**Europäisches Patentamt**

**European Patent Office**

**Office européen des brevets**

(19)

(11) Numéro de publication : **0 502 763 A1**

(12) # DEMANDE DE BREVET EUROPEEN

(21) Numéro de dépôt : **92400501.0**

(22) Date de dépôt : **27.02.92**

(51) Int. Cl.⁵ : **B65G 69/28**

(30) Priorité : **04.03.91 FR 9102542**

(43) Date de publication de la demande :
**09.09.92 Bulletin 92/37**

(84) Etats contractants désignés :
**DE ES FR GB IT NL**

(71) Demandeur : **Pinto, Manuel**
**25 rue Gayat**
**F-51110 Caurel (FR)**

(72) Inventeur : **Pinto, Manuel**
**25 rue Gayat**
**F-51110 Caurel (FR)**

(74) Mandataire : **Gérardin, Robert Jean René**
**PROT'INNOV INTERNATIONAL SA 18 et 18bis,**
**rue de Bellefond BP 328-09**
**F-75428 Paris Cèdex 09 (FR)**

(54) **Niveleur de quai équilibré.**

(57)  L'invention concerne un niveleur équilibré pour quai de chargement.

  Le plateau (20) est équilibré par l'intermédiaire d'une bielle (30) et d'une biellette (31), articulées, respectivement, par rapport au châssis (10) et par rapport au plateau (20), reliées par un axe (32) rappelé vers la charnière (12) du plateau (20) par des ressorts (44), reliés à un palonnier (43) muni d'une tringle (40) assurant la liaison avec ledit axe (32). L'ouverture et le maintien du volet (50) en position déployée sont obtenus par un levier articulé (60), dont l'un des bras est relié à une chaîne (70) et dont l'autre comporte un galet (64) prenant appui contre le volet (50).

FIG.1

EP 0 502 763 A1

L'invention concerne un niveleur de quai équilibré.

Il est connu d'utiliser un plateau articulé par rapport au bord d'un quai de chargement pour compenser la différence de niveau pouvant exister entre le quai et le plancher d'un camion ou d'une remorque, pour permettre le chargement ou le déchargement de celui-ci ou de celle-ci, afin, par exemple, de pouvoir effectuer la manutention à l'aide d'un élévateur, d'un transporteur de palettes ou équivalent.

Les dispositifs dont il s'agit, figurant actuellement dans l'état de la technique et communément appelés "niveleurs équilibrés", sont constitués, essentiellement, d'un plateau métallique, articulé par rapport au bord du quai, dont l'extrémité avant comporte un volet articulé destiné à compenser l'écart qui pourrait subsister entre le plateau articulé et le bord du plancher du camion. La masse de l'ensemble est compensée par un levier, rappelé en position verticale par des ressorts, dont l'une des extrémités s'articule par rapport au quai et dont l'autre prend appui, par l'intermédiaire d'un galet, contre une came fixée sous le dessous du plateau ou sur le châssis. L'articulation, vers le haut, du plateau provoque, par l'intermédiaire d'une chaîne fixée au sol entraînant en rotation un système bielle-manivelle, le relevage progressif du volet qui, en fin de course, est rendu solidaire au plateau par l'intermédiaire d'un doigt de verrouillage qui bloque son système de manoeuvre.

Ainsi, après avoir ouvert les portes ou la ridelle du camion ou de la remorque et mis celui-ci en contact avec des butoirs en caoutchouc situés sur l'avant du niveleur, il suffit de relever le plateau, par action manuelle sur une poignée prévue à cet effet, pour obtenir le débattement maximum qui est déterminé par la longueur de la chaîne, qui, en fin de course, provoque le déplacement du volet de compensation. Le plateau peut-être alors articulé vers le bas, jusqu'à mise en contact du volet contre le dessus du plancher du véhicule. Les opérations de manutention peuvent alors commencer et pendant toute leur durée les variations de hauteur et de niveau du plancher du camion sont automatiquement compensées et le plateau reste en contact permanent avec ledit plancher. La remise du niveleur en position d'attente est obtenue par action sur le plateau de celui-ci, après avoir débloqué le système de manoeuvre du volet par action sur une poignée prévue à cet effet.

Toutefois, les niveleurs de cette conception présentent l'inconvénient de nécessiter un châssis assez important, de ne pas assurer une compensation régulière de la charge selon tous les angles d'inclinaison du plateau, de ne pas se prêter à un réglage aisé, compte-tenu, notamment, du fait que le profil de la came ne peut être modifié, et d'exiger une intervention manuelle pour bloquer le volet en position ouverte, voire, aussi, pour le débloquer.

L'invention vise à remédier à ces inconvénients en proposant un niveleur de quai, dont le dispositif de compensation soit simple et facile à régler et à contrôler et dont le volet se bloque et se débloque automatiquement.

Le niveleur de quai équilibré selon l'invention, comportant un plateau articulé par rapport à un châssis fixé au quai de chargement, dont l'extrémité libre est munie d'un volet dont l'ouverture est provoquée par le relevage du plateau par l'intermédiaire d'une chaîne fixée au sol ou sur le châssis inférieur, avec l'interposition éventuelle d'un ressort, la masse de l'ensemble étant équilibrée par un système de bielles et de ressorts, se caractérise principalement en ce que l'équilibrage de l'ensemble est obtenu par l'intermédiaire d'une bielle articulée par rapport au châssis porte-plateau et d'une biellette articulée par rapport au plateau dont les extrémités libres sont reliées à un axe d'articulation rappelé vers la charnière d'articulation du plateau par un ou plusieurs ressorts réunis par un palonnier muni d'une tringle assurant la liaison avec l'axe reliant la bielle et la biellette, et en ce que l'ouverture et le maintien ouvert du volet sont obtenus par un levier, articulé par rapport à l'extrémité avant du plateau, dont l'une des extrémités est reliée à la chaîne de traction et dont l'autre est munie d'un galet prenant appui sous le volet.

Les points d'articulation de la bielle et de la biellette, par rapport à leurs supports respectifs, sont réglables respectivement dans une direction perpendiculaire à la face avant du quai de chargement et dans un plan perpendiculaire à l'axe de la charnière d'articulation du plateau.

Selon un mode de réalisation préférentiel, le réglage des points d'articulation de la bielle et de la biellette, respectivement par rapport au quai de chargement et par rapport au plateau, s'obtient par l'intermédiaire de glissières et de coulisseaux, et de systèmes à vis, écrous et tourillons.

La tension exercée par les ressorts de rappel sur l'axe d'articulation commun de la bielle et de la biellette se règle par l'intermédiaire d'une partie filetée située à l'extrémité de la tige de rappel ou de liaison et d'un écrou prenant appui contre ledit axe d'articulation.

Préférentiellement aussi, le rapport existant entre la longueur de la bielle et celle de la biellette est de 5 ; la distance **D** séparant la glissière de réglage du point d'articulation de la bielle de la charnière d'articulation du plateau représente, approximativement, 15 à 20 % de la longueur totale **L** du plateau, volet replié ; le plan médian transversal **P** de la glissière de réglage de l'axe d'articulation de la biellette par rapport au plateau est situé à une distance **E** de l'axe d'articulation du plateau représentant, approximativement, 60 à 86 % de la longueur L du plateau.

Le levier articulé, assurant l'ouverture et le maintien en position ouverte du volet, est déséquilibré en faveur du bras portant le galet, afin que celui-ci soit rappelé en permanence vers le bas, par simple gravité ou par un ressort.

En position de pleine ouverture du volet, le bras portant le galet est maintenu bloqué contre l'extrémité du plateau, par arc-boutement du volet sur le galet, du fait de l'inclinaison alpha laissée au dit volet par rapport à la face supérieure du plateau et tout le temps que subsiste ce désalignement alpha.

Le levier articulé, assurant l'ouverture et le maintien en position ouverte du volet, est coudé, de façon que le point d'accrochage de la chaîne à ressort soit situé au-delà de la ligne G passant par l'axe de rotation dudit levier articulé et par celui du galet.

Les avantages obtenus, grâce à cette invention, consistent essentiellement en ce que l'on obtient un équilibrage parfait du plateau sur la totalité de l'angle d'articulation de celui-ci, en faisant appel à des ressorts de moindre tension agissant sur des bielles à point d'application réglable, permettant une adaptation précise à la masse et à la forme du plateau, que le levier à galet, utilisé pour la manoeuvre du volet, s'escamote de lui-même, par son propre poids, dès que le volet vient en contact avec le plancher du véhicule et que celui-ci s'aligne avec le plateau, la chaîne à ressort étant alors détendue.

D'autres caractéristiques et avantages apparaîtront dans la description qui va suivre d'un niveleur de quai équilibré, réalisé selon l'invention, donné à titre d'exemple non limitatif au regard des dessins annexés sur lesquels :

– la figure 1 représente une vue de côté du niveleur avec le plateau en position horizontale A, avec représentation, en pointillé, d'une position intermédiaire B et d'une position extrême C.

– la figure 2 représente une vue détaillée du dispositif d'ouverture et de maintien en position ouverte du volet, avec une représentation, en pointillé, d'une position intermédiaire et d'une position extrême correspondant aux positions A et C du plateau, telles que représentées à la figure 1.

Les figures représentent un niveleur de quai équilibré, comportant un châssis 10, fixé sur le devant d'un quai 11, par rapport auquel s'articule, autour d'une charnière 12, un plateau 20 équilibré par l'intermédiaire d'une bielle 30, fixée au châssis 10 par l'intermédiaire d'un axe 13, d'une glissière 14 et d'un coulisseau 15, solidarisés, l'un à l'autre, par l'intermédiaire d'une équerre 16 portant un écrou 17, d'une vis 18 et d'un tourillon 19, d'une biellette 31 fixée sous le plateau 20 par l'intermédiaire d'un axe 21, d'une glissière 22 et d'un coulisseau 23, solidarisés, l'un à l'autre, par l'intermédiaire d'une équerre 24 portant un écrou 25, d'une vis 26 et d'un tourillon 27 ; la bielle 30 et la biellette 31 étant réunies par un axe 32, rappelé vers la charnière 12 par une tringle 40, à extrémité filetée 41 et à écrou 42, reliée par un palonnier 43 à un ensemble de ressorts 44 accrochés à une équerre 28

solidaire du plateau 20 ; le dispositif d'ouverture du volet 50 à axe d'articulation 51 est constitué d'un levier 60, à axe d'articulation 61, dont l'un des bras 62 est muni d'une chape 63 supportant un galet 64 et dont l'autre bras 65, coudé à environ 60°, est relié à l'extrémité de la chaîne 7O.

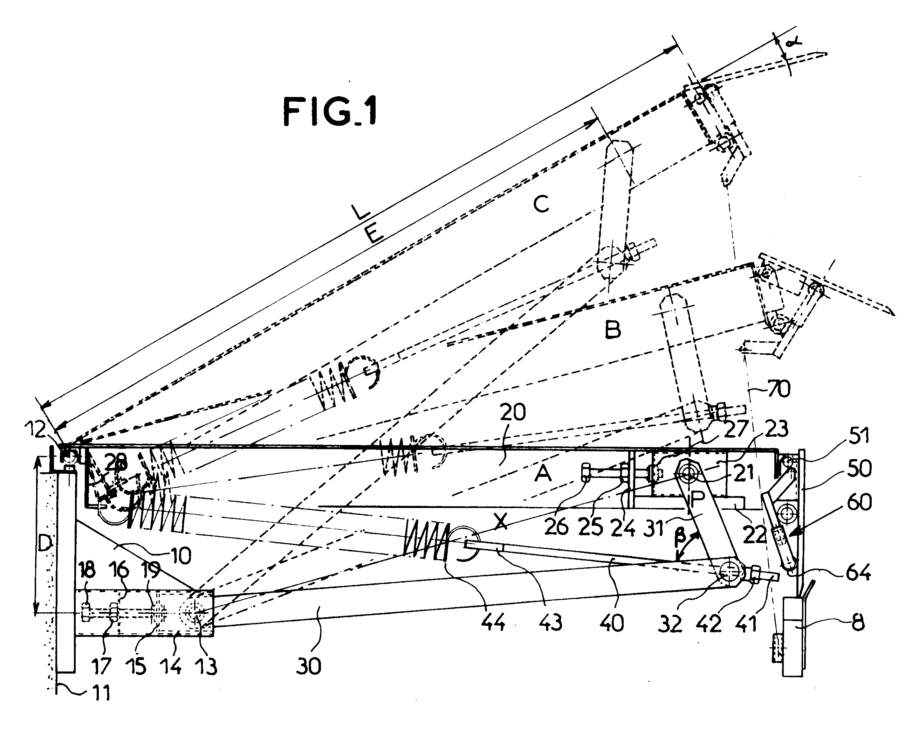

En examinant maintenant plus en détail la figure 1, on remarque que l'angle Bêta, formé par la bielle 30 et la biellette 31, augmente au fur et à mesure du relevage du plateau 20, ce qui a pour effet de réduire la distance séparant l'axe d'articulation 32 de la bielle 30 et de la biellette 31 de la droite imaginaire X joignant l'axe d'articulation 13 de la bielle 30 par rapport au châssis 10 à l'axe d'articulation 21 de la biellette 31 par rapport au plateau 20, comme le montrent les positions A, B et C du plateau; ce qui a pour effet de compenser le détensionnement des ressorts 44 en tenant compte du déplacement, vers l'arrière, du centre de gravité du plateau 20. Les possibilités de réglage, offertes par les vis 18 et 26 commandant le déplacement des coulisseaux 15 et 23 et par l'écrou 42, permettent de modifier la tension des ressorts 44. Toutefois, selon un mode de réalisation simplifié correspondant à une utilisation spécifique, les coulisseaux 15 et 23 peuvent être supprimés et remplacés par des chapes fixées directement au châssis ou au plateau.

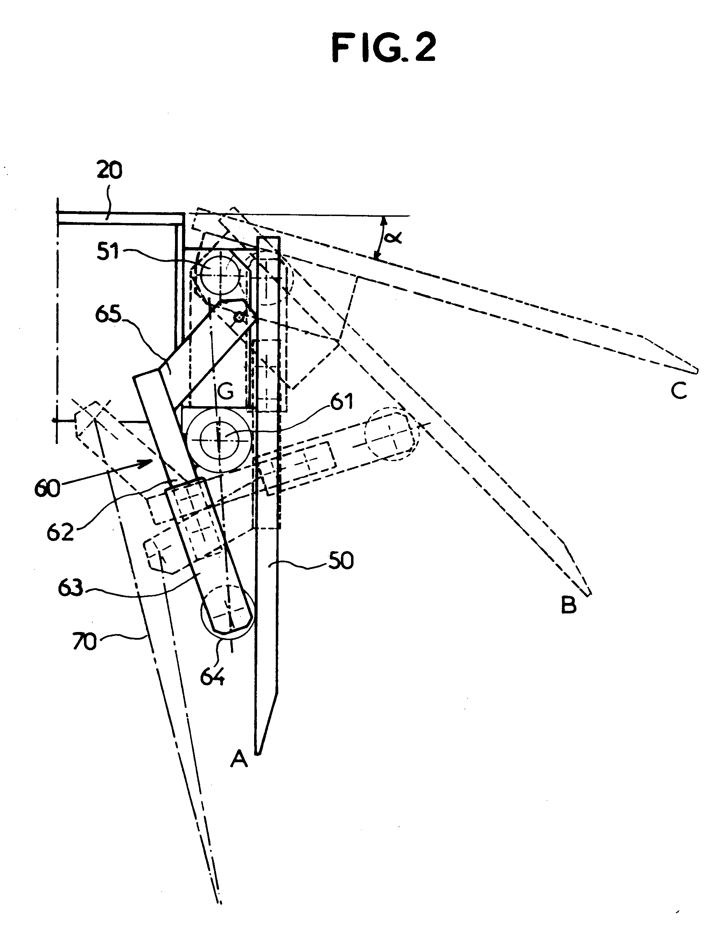

En examinant maintenant en détail la figure 2 à la lumière de la figure 1, représentant les deux positions extrêmes A et C et une position intermédiaire B du plateau, on remarque que, pour une certaine position du plateau 20 intermédiaire aux positions A et B, la chaîne 70 se tend et provoque le basculement vers l'avant et vers le haut du bras 62 portant le galet 64 du levier 60, ce qui a pour effet de relever progressivement le volet 50 par roulement dudit galet 64 sous ledit volet 50, jusqu'à mise en butée du galet 64 contre l'axe d'articulation 51 du volet 50, ce qui a pour effet, compte-tenu du désalignement alpha, vers le bas, du volet 50 par rapport au plateau 20, d'assurer le blocage dans cette position du volet 50 et du levier 60, quelle que soit la tension exercée par la chaîne 70. On obtient, ainsi, le déblocage automatique de l'ensemble, dès que le volet 50 s'aligne par rapport au plateau 20, par suite d'une mise en appui dudit volet 50 contre le plancher du véhicule ; ce qui a pour effet de permettre le basculement, vers le bas, du bras 62 du levier 60. Ainsi, dès que le véhicule s'est écarté du plateau 20 et que le volet 50 n'est plus retenu, celui-ci bascule vers le bas, pour prendre finalement une position perpendiculaire au plateau 20 lui permettant d'exercer son rôle d'arc-boutant du plateau 20 par rapport à la butée 8, tel que représenté sur la figure 1 (position A).

On remarque qu'aucune action de blocage ni de déblocage manuelle du volet n'est nécessaire et que ce niveleur de quai, véritablement équilibré, peut être mis en oeuvre sans autre intervention qu'une légère action vers le haut ou vers le bas sur le plateau, dont le mouvement est ainsi parfaitement contrôlable sur toute l'étendue de la plage de réglage.

Le niveleur de quai selon l'invention est destiné, principalement, à équiper les quais d'accès à des magasins ou à des entrepôts.

## Revendications

1. Niveleur de quai équilibré, comportant un plateau articulé par rapport à un châssis fixé au quai de chargement, dont l'extrémité libre est munie d'un volet dont l'ouverture est provoquée par le relevage du plateau, par l'intermédiaire d'une chaîne, la masse de l'ensemble étant équilibrée par un système de bielles et de ressorts, caractérisé en ce que l'équilibrage de l'ensemble est obtenu par l'intermédiaire d'une bielle (30) articulée par rapport au châssis (10), d'une biellette (31) articulée par rapport au plateau (20), dont les extrémités libres sont reliées par un axe d'articulation (32), rappelé vers la charnière d'articulation (12) du plateau (20) par un ou plusieurs ressorts (44) reliés à un palonnier (43) muni d'une tringle (40) assurant la liaison avec l'axe reliant la bielle (30) à la biellette (31), et en ce que l'ouverture et le maintien ouvert du volet (50) sont obtenus par un levier (60), articulé par rapport à l'extrémité avant du plateau (20), dont l'un des bras (65) est relié à la chaîne de traction (70) et dont l'autre (62) est muni d'une chape (63) portant un galet (64) prenant appui sous le volet (50).

2. Niveleur de quai selon la revendication 1, caractérisé en ce que les points d'articulation (13,21) de la bielle (30) et de la biellette (31) sont réglables, dans un plan perpendiculaire à l'axe de la charnière d'articulation (12) du plateau (20).

3. Niveleur de quai selon (a revendication 2, caractérisé en ce que le réglage du point d'articulation (13) de la bielle (30) et (21) de la biellette (31) s'obtient par l'intermédiaire de glissières (14,22), de coulisseaux (15,23) et de systèmes à vis (18,26), écrous (17,25) et tourillons (19,27).

4. Niveleur de quai selon la revendication 1, caractérisé en ce que la tension des ressorts (44), par rapport à l'axe d'articulation (32) de la bielle (30) et de la biellette (31), s'obtient par l'intermédiaire d'un filetage (41) réalisé à l'extrémité de la tringle (40) et d'un écrou de réglage (42) prenant appui contre ledit axe d'articulation (32).

5. Niveleur de quai selon la revendication 1, caractérisé en ce que la longueur de la biellette (31) représente, approximativement, le 1/5 de celle de la bielle (30).

6. Niveleur de quai selon la revendication 1, caractérisé en ce que la distance (D), séparant la glissière (14) de réglage du point d'articulation de la bielle (30), de la charnière d'articulation (12) du plateau (20), représente, approximativement, 15 à 20 % de la longueur (L) du plateau, volet (50) replié.

7. Niveleur de quai selon la revendication 1, caractérisé en ce que le plan médian transversal (P) de la glissière (22) de réglage de l'axe d'articulation (32) de la biellette (31) par rapport au plateau (20) est situé à une distance (E) de l'axe de la charnière d'articulation (12) du plateau (20), représentant, approximativement, 60 à 86 % de la longueur (L) du plateau (20).

8. Niveleur de quai selon la revendication 1, caractérisé en ce que le levier articulé (60), assurant l'ouverture et le maintien en position ouverte du volet (50), est déséquilibré en faveur du bras (62) portant le galet (64), afin que celui-ci soit rappelé, en permanence, en position basse, par simple gravité.

9. Niveleur de quai selon la revendication 1, caractérisé en ce que, en position de pleine ouverture du volet (50) par l'intermédiaire du levier articulé (60), le bras (62), portant te galet (64) de celui-ci, est maintenu bloqué contre la face avant du plateau (20), par simple arc-boutement du volet (50) sur le galet (64), du fait de l'inclinaison alpha laissée au dit volet (50) par rapport à la face supérieure du plateau (20), et tout le temps que subsiste ce désalignement alpha.

10. Niveleur de quai selon la revendication 1, caractérisé en ce que le levier articulé (60), assurant l'ouverture et le maintien en position ouverte du volet (50), est coudé, de façon que le point d'accrochage de la chaîne (70) soit situé au-delà de la ligne droite (G) passant par l'axe (61) de rotation du levier articulé (60) et par celui du galet (64) porté par ledit levier (60).

FIG.1

# FIG.2

**Office européen des brevets**

# RAPPORT DE RECHERCHE EUROPEENNE

Numero de la demande

EP 92 40 0501

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|-------------------------------------------------------------------------------|------------------------|--------------------------------------|
| A | US-A-3 486 181 (R. W. HECKER)<br>* colonne 3, ligne 31 - ligne 54; figures *<br>--- | 1,4 | B65G69/28 |
| A | FR-A-2 548 639 (KELLEY COMP.)<br>* abrégé; figures *<br>--- | 1,4 | |
| A | US-A-4 343 058 (N. M. LOBLICK)<br>* colonne 3, ligne 50 - colonne 4, ligne 41; figures *<br>--- | 1,4-7 | |
| A | GB-A-2 109 334 (D. J. ELLICKSON)<br>* page 2, ligne 111 - page 3, ligne 8; figures *<br>--- | 1,8,10 | |
| A | US-A-3 763 514 (J. L. BISHOP)<br>* colonne 6, ligne 8 - ligne 31 *<br>* colonne 8, ligne 26 - ligne 64; figures *<br>----- | 1,8-10 | |

**DOMAINES TECHNIQUES RECHERCHES (Int. Cl.5)**

B65G

Le présent rapport a été établi pour toutes les revendications

| Lieu de la recherche | Date d'achèvement de la recherche | Examinateur |
|----------------------|-----------------------------------|-------------|
| LA HAYE | 26 MAI 1992 | VAN ROLLEGHEM F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)